(19) Europäisches Patentamt
European Patent Office
Office européen des brevets

(11) **EP 4 683 274 A1**

(12) **EUROPEAN PATENT APPLICATION**

(43) Date of publication:
**21.01.2026 Bulletin 2026/04**

(21) Application number: **25189964.7**

(22) Date of filing: **16.07.2025**

(51) International Patent Classification (IPC):
***H04L 9/40*** *(2022.01)*     *H04L 9/32* *(2006.01)*
***H04L 67/12*** *(2022.01)*

(52) Cooperative Patent Classification (CPC):
**H04L 63/0428; H04L 9/0631; H04L 9/0637;
H04L 9/0844; H04L 63/0435; H04L 63/0869;
H04L 63/162**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **16.07.2024 US 202463672044 P**

(71) Applicant: **Marvell Asia Pte Ltd
Singapore 369522 (SG)**

(72) Inventors:
• Chenikkayala, Nagadevendra
**560029 Bangalore (IN)**
• Parmar, Harivaden
**Wokingham, RG40 4UH (GB)**

(74) Representative: **Grünecker Patent- und
Rechtsanwälte
PartG mbB
Leopoldstraße 4
80802 München (DE)**

(54) **METHOD AND APPARATUS FOR SECURED KEY DISTRIBUTION BETWEEN A HOST AND A RESOURCE CONSTRAINED ETHERNET BRIDGE**

(57)     A new approach is proposed to support secured key distribution between a host and a resource-constrained Ethernet bridge using MACSec, wherein the resource-constrained Ethernet bridge is a hardware having a plurality of hardware blocks but no processor or non-volatile storage. Under the proposed approach, a protocol for secured key distribution is fully implemented using existing hardware blocks of the resource-constrained Ethernet bridge. First, session encryption keys (SEKs) are generated independently by both the host and the Ethernet bridge. If the SEKs match, the host is configured to generate and distribute a Secure Association Key (SAK) to the Ethernet bridge to be installed on it. After the SAK is installed on the Ethernet bridge, a secured communication channel is established between the host and the Ethernet bridge. The secured communication channel can be utilized for secured communication of sensitive data collected by the Ethernet bridge from a plurality of electronic devices.

FIG. 2

EP 4 683 274 A1

Description

## RELATED APPLICATION

This application is a nonprovisional application and claims the benefit and priority to a provisional application number 63/672,044 that was filed on July 16, 2024, which is incorporated herein by reference in its entirety.

## BACKGROUND

An Ethernet bridge is a hardware device that connects to a plurality of electronic devices, converts data received from the plurality of electronic devices into Ethernet frames/packets, and communicates the Ethernet frames/packets to a host over Ethernet. In some embodiments, the electronic devices are sensing devices configured to sense/collect data at locations where the electronic devices are deployed. For a non-limiting example, the electronic devices can be but are not limited to cameras, and a camera Ethernet bridge is a hardware device that converts the frames captured by the cameras into Ethernet frames/packets and sends to the host. In one example, the cameras and the camera Ethernet bridge are deployed in a vehicle.

The data collected by the Ethernet bridge could be sensitive, e.g., data containing vehicle motion, surroundings, and passengers in a vehicle. This sensitive information required to be protected with sufficient security mechanism. Media Access Control Security or MACsec is a well-known standard in Local Area Network (LAN) standards from IEEE and is used to secure Layer 2 TCP/IP network traffic. The Extensible Authentication Protocol over LAN used in conjunction with the MACsec Key Agreement (EAPOL-MKA) protocol from the IEEE 802.1x-2020 standard provides an approach to automatically distribute the MACsec keys and monitor the participants of a secure association/channel that has been established. However, EAPOL-MKA requires a state machine implementation with software to be stored in memory (e.g., SRAM) and executed by a processor (e.g., CPU), and it could take up much more silicon space and memory to be implemented in hardware alone on a resource-constrained Ethernet bridge.

The foregoing examples of the related art and limitations related therewith are intended to be illustrative and not exclusive. Other limitations of the related art will become apparent upon a reading of the specification and a study of the drawings.

## BRIEF DESCRIPTION OF THE DRAWINGS

Aspects of the present disclosure are best understood from the following detailed description when read with the accompanying figures. It is noted that, in accordance with the standard practice in the industry, various features are not drawn to scale. In fact, the dimensions of the various features may be arbitrarily increased or reduced for clarity of discussion.

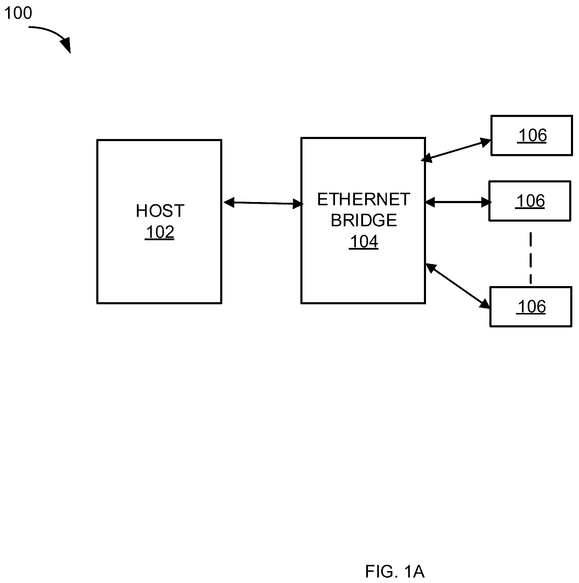

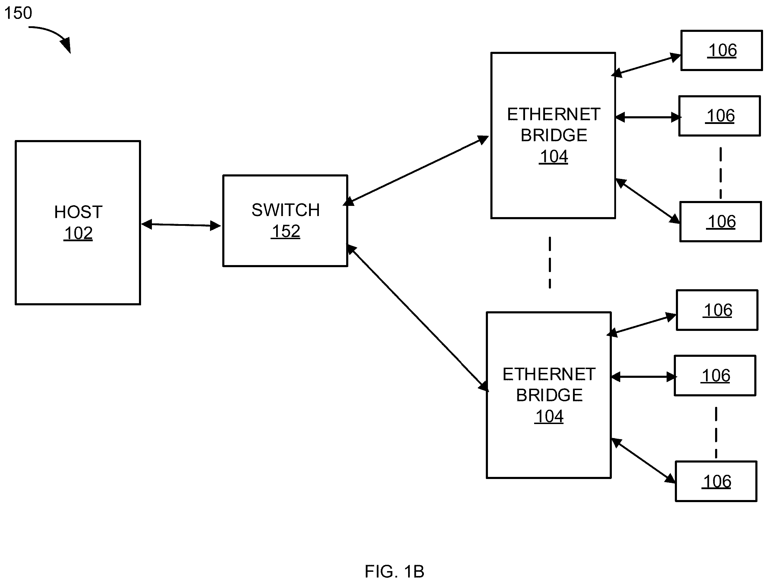

FIG. 1A depicts an example of a diagram of a system 100 to support secured host to Ethernet bridge key distribution according to one aspect of the present embodiments; FIG. 1B depicts another example of a diagram of a system to support host to Ethernet bridge key distribution, wherein, the system further includes a switch communicatively coupled between the host 102 and a plurality of Ethernet bridges according to one aspect of the present embodiments.

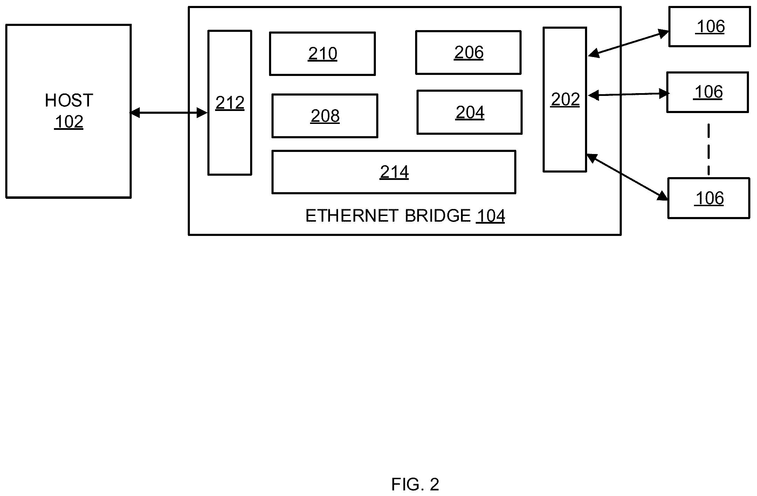

FIG. 2 depicts an example of the Ethernet bridge having the plurality of hardware blocks configurable by the host according to one aspect of the present embodiments.

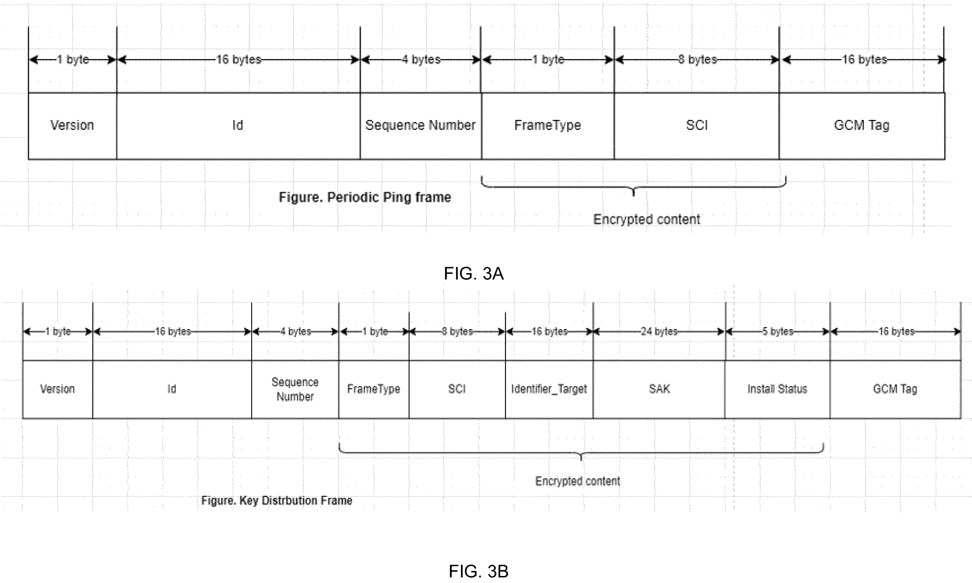

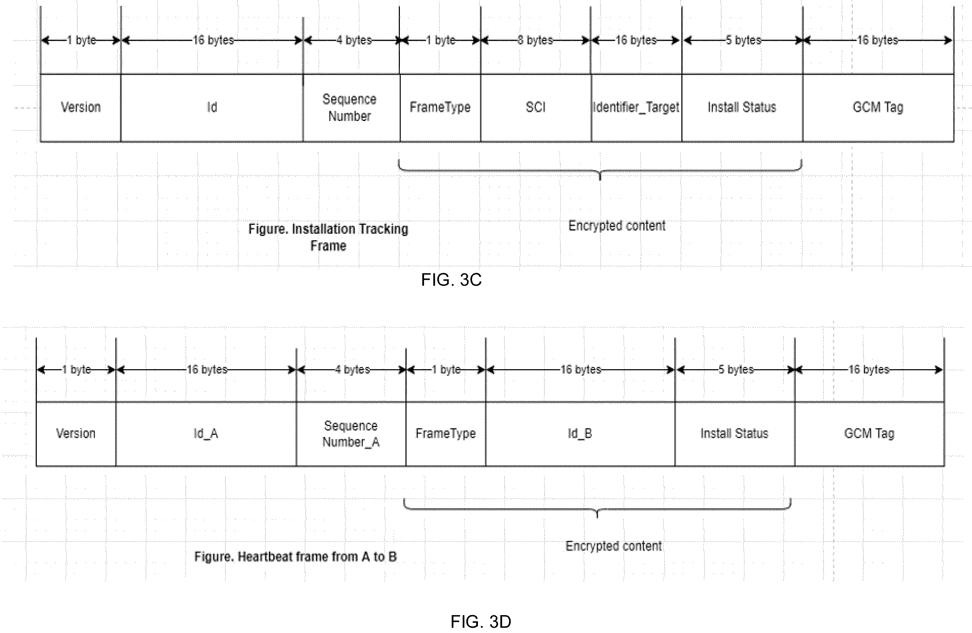

FIG. 3A depicts an example of the periodic frame/packet sent from the Ethernet bridge to the host to find out a potential participant for the MACsec session; FIG. 3B depicts an example of the SAK distribution packet sent from the host to the Ethernet bridge; FIG. 3C depicts an example of the installation status frame containing an Install_Status field used to track the SAK installation status; FIG. 3D depicts an example of the heartbeat frame according to one aspect of the present embodiments.

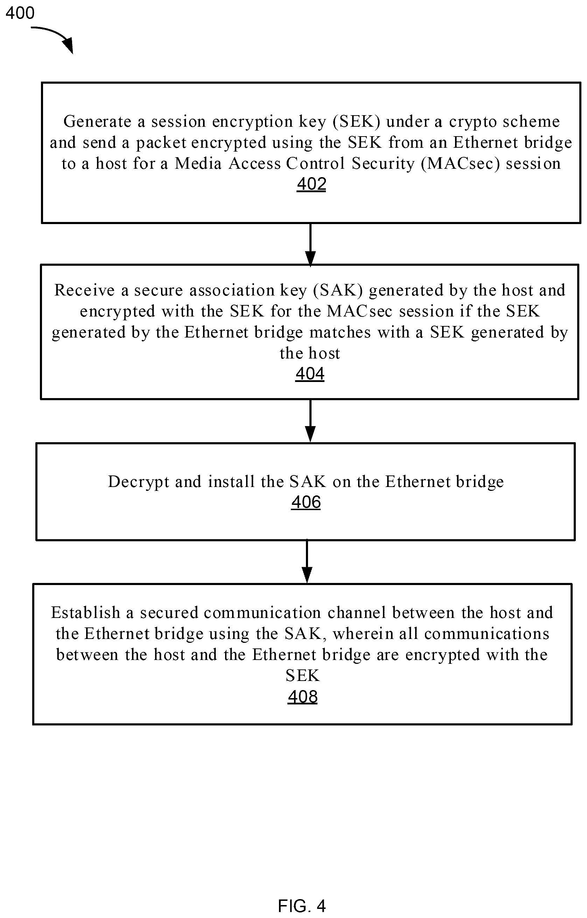

FIG. 4 depicts a flowchart of an example of a process to support secured host to Ethernet bridge key distribution according to one aspect of the present embodiments.

## DETAILED DESCRIPTION

The following disclosure provides many different embodiments, or examples, for implementing different features of the subject matter. Specific examples of components and arrangements are described below to simplify the present disclosure. These are, of course, merely examples and are not intended to be limiting. In addition, the present disclosure may repeat reference numerals and/or letters in the various examples. This repetition is for the purpose of simplicity and clarity and does not in itself dictate a relationship between the various embodiments and/or configurations discussed.

Before various embodiments are described in greater detail, it should be understood that the embodiments are not limiting, as elements in such embodiments may vary. It should likewise be understood that a particular embodiment described and/or illustrated herein has elements which may be readily separated from the particular embodiment and optionally combined with any of several other embodiments or substituted for elements in any of several other embodiments described herein. It should also be understood that the terminology used herein is for the purpose of describing the certain concepts, and the terminology is not intended to be limiting. Unless defined otherwise, all technical and scientific terms used herein have the same meaning as commonly understood in the art to which the embodiments pertain.

A new approach is proposed that contemplates system and method to support secured key distribution between a host and a resource-constrained Ethernet bridge using MACSec, wherein the resource-constrained Ethernet bridge is a hardware having a plurality of hardware (e.g., ASIC) blocks but no processor or non-volatile storage (e.g., flash memory). Under the proposed approach, a protocol for secured key distribution is fully implemented using an existing MACsec hardware block of the resource-constrained Ethernet bridge. First, session encryption keys (SEKs) are generated independently by both the host and the Ethernet bridge. Second, the host and the Ethernet bridge exchange a frame/packet to determine if they both have the same SEK. If the SEKs match, the host is configured to distribute a MACSec key (also known as a Secure Association Key or SAK) to the Ethernet bridge to be installed on it. After the SAK is installed on the Ethernet bridge, a secured communication channel is established between the host and the Ethernet bridge. The secured communication channel can then be utilized for secured communication of sensitive data collected by the Ethernet bridge from a plurality of electronic devices.

Under the proposed approach, the entire protocol for MACsec Key distribution involves a simple transaction and is implemented in hardware of a resource-constrained Ethernet bridge with minimal resources (e.g., no use of CPU or flash memories and minimal volatile memory such as SRAM). Under the key distribution protocol, the secured communication channel can be established with little data being exchanged, e.g.. less than 100 bytes for the SAK distribution frame/packet. In addition, hardware blocks such as Advanced Encryption Standard (AES) in Galois/Counter Mode (GCM), i.e., AES-GCM, and/or Cipher-based Message Authentication Code (CMAC), i.e., AES-CMAC, which are already available in the Ethernet bridge can be reused for session encryption key derivation.

As discussed herein, each of the host or the Ethernet bridge is referred to as a peer in an Ethernet communication channel and each message, frame, or packet refers to an Ethernet packet including content/data generated by either the host or the Ethernet bridge and exchanged between the peers.

FIG. 1A depicts an example of a diagram of a system 100 to support secured host to Ethernet bridge key distribution. Although the diagrams depict components as functionally separate, such depiction is merely for illustrative purposes. It will be apparent that the components portrayed in this figure can be arbitrarily combined or divided into separate software, firmware and/or hardware components. Furthermore, it will also be apparent that such components, regardless of how they are combined or divided, can execute on the same host or multiple hosts, and wherein the multiple hosts can be connected by one or more networks.

In the example of FIG. 1A, the system 100 includes a host 102, an Ethernet bridge 104, and a plurality of electronic devices 106s connected to the Ethernet bridge 104. Here, the host 102 is a computing unit/appliance/device having one or more processors and software instructions stored in a storage unit, such as a non-volatile memory of the computing unit for practicing one or more processes. When the software instructions are executed, at least a subset of the software instructions is loaded into memory by the computing unit, which becomes a special purposed one for practicing the processes. The processes may also be at least partially embodied in the computing unit into which computer program code is loaded and/or executed, such that, the host becomes a special purpose computing unit for practicing the processes. For non-limiting examples, the host 102 can be a computing device, a communication device, a storage device, or any computing device capable of running a software component. For non-limiting examples, the computing device can be but is not limited to a server machine, a laptop PC, a desktop PC, a tablet, a Google Android device, an iPhone, an iPad, and a voice-controlled speaker or controller.

In the example of FIG. 1A, the Ethernet bridge 104 includes a plurality of hardware blocks each configured to perform a certain task. In some embodiments, unlike the host 102, the Ethernet bridge 104 is resource constrained with no processor, no non-volatile storage such as a flash storage, and limited volatile storage such as SRAM. The Ethernet bridge 104 is configured to interact with the host 102 over one or more communication networks (not shown), which can be but are not limited to, Internet, intranet, wide area network (WAN), local area network (LAN), wireless network, Bluetooth, Wi-Fi, and mobile communication network for communications among the engines. The physical connections of the communication networks and the communication protocols are well known to those skilled in the art.

FIG. 2 depicts an example of the Ethernet bridge 104 having the plurality of hardware blocks configurable by the host 102. As shown by the example of FIG. 2, the Ethernet bridge 104 includes an ingress block 202 configured to collect data from the plurality of electronic devices 106s. In some embodiments, the Ethernet bridge 104 further includes a data converter block 204 configured to convert the data collected from the plurality of electronic devices 106s into one or more Ethernet frames/packets. In some embodiments, the Ethernet bridge 104 further includes a resource constrained MKA block 206 configured to receive the SAK distributed from the host 102 and to install the SAK on the Ethernet bridge 104. In some embodiments, the Ethernet bridge 104 further includes a MACsec block 208 configured to encrypt the one or more Ethernet packets before sending them to the host 102 and decrypt Ethernet packets received from the host 102. Note that the MACsec block 208 is functional only if the SAK has been successfully installed on the Ethernet bridge 104. In some embodiments, the Ethernet bridge 104 further includes an egress block 212 configured to communicate (send and received) packets to and from the host 102 and a frame parser 210 configured to parse the packets received from the host 102 and to retrieve content (e.g., SAK) from the received packets. In some embodiments, the Ethernet bridge 104 further includes a set of registers 214 configured to temporarily maintain data generated by the plurality of hardware blocks of the Ethernet bridge 104 during operation.

In the example of FIG. 1A, each of the plurality of electronic devices 106s can be a sensing device or sensor configured to collect data at the location the sensing device is deployed and to provide the collected data to the Ethernet bridge 104. For example, each electronic device 106 can be but is not limited to an audio/video-enabled device such as an image and/or video camera, an audio recording device, a GPS-enabled device, a radar, a Light Detection and Ranging (LiDAR) device, and other type of electronic device capable of collecting data. Once the collected data is received by the Ethernet bridge 104, the Ethernet bridge 104 is configured to convert the received data into a plurality of Ethernet frames/packets to be transmitted to the host 102. In some embodiments, both the Ethernet bridge 104 and the plurality of electronic devices 106s are deployed in an automobile.

FIG. 1B depicts another example of a diagram of a system 150 to support host to Ethernet bridge key distribution, wherein, the system 150 further includes a switch 152 communicatively coupled between the host 102 and a plurality of Ethernet bridges 104s, wherein each of the plurality of Ethernet bridges 104s connects to a plurality of electronic devices 106s. In some embodiments, the host 102 is configured to select one of the plurality of Ethernet bridges 104s at a time by configuring the switch 152 accordingly, so that the host 102 can distribute a SAK to the one of the plurality of Ethernet bridges 104s to establish a peer-to-peer communication channel with the one of the plurality of Ethernet bridges 104s to receive data from the electronic devices 106 associated with that Ethernet bridge 104. Once the communication with that specific Ethernet bridge 104 is complete, the host 102 may close that peer-to-peer communication channel and establish a new communication channel with another Ethernet bridge 104 in order to receive data from the electronic devices 106 associated with that Ethernet bridge 104.

Since the data collected by the electronic devices 106s may be sensitive, the data needs to communicated from the Ethernet bridge 104 to the host 102 over a secured communication channel. As discussed below, a protocol scheme for secured key distribution is implemented utilizing the hardware blocks in the Ethernet bridge 104 as shown in FIG. 2. Such hardware-based approach is an alternative to the EAPOL-MKA protocol defined in the IEEE 802.1x-2020 standard.

A typical MACsec encryption scheme with a cipher suite (e.g., GCM-AES-128) uses the following, for example, AES-GCM encryption formula:

$$(E,\ TAG)\ =\ AES\_GCM(Input,\ AAD,\ IV,\ Key)$$

where E is the encrypted Ethernet packet, TAG is an AES-GCM tag, input is the Ethernet frame of data/content, AAD is combination of Ethernet and MACsec header, initial value (IV) is a combination of Secured channel Identifier (SCI) and port number, and Key is a Secure Association Key (SAK) for the secured communication channel. In some embodiments, SCI is defined in MACsec as a combination of MAC Address and the port number.

To setup the secured communication channel from both peers on the transmit side, e.g., the Ethernet bridge 104, and on the receive side, e.g., the host 102, one or more of the following parameters are required: SCI, the lowest packet number (PN), the next PN (both PNs can be set 0 during configuration), confidentiality taken from the user and/or protocol, confidentiality offset (always 0 to encrypt the entire data frame), and an association number (AN) for the current SAK. Once communicated and/or hardcoded, these parameters can be utilized to setup the secured communication channel and to generate and install SAK to setup secure associations.

The proposed approach for secured communication between the host 102 and the Ethernet bridge 104 has two steps, first step is to implement a cryptography scheme for the host 102 and the Ethernet bridge 104, and the second step is to implement a key distribution protocol, which uses the cryptography scheme for SAK distribution and installation on the Ethernet bridge 104. At the first step, a session encryption key (SEK) is derived by each of the host 102 and the Ethernet bridge 104 using a pseudorandom function (PRF) defined in NIST SP 800 108r1. The SEK can then be used to encrypt the communications related to implementing the key distribution protocol between the host 102 and the Ethernet bridge 104. In some embodiments, the host 102 and/or the Ethernet bridge 104 is configured to determine a peer (the Ethernet bridge 104 or the host 102) it is going to communicating with by periodically sending a message/frame/packet encrypted with the SEK to ping the peer. Based on the response capability of the peer, e.g., the peer can reply to the message and encrypt the response with its SEK, the host 102 and/or the Ethernet bridge 104 may determine if their SEKs match and thus can encrypt and decrypt packets exchanged between them using the same SEK under a crypto scheme. In some embodiments, AES-GCM is used as the crypto scheme for secured message communication and key distribution as discussed above. Alternatively, AES-CMAC can be used is used as the crypto scheme if CMAC is the PRF used or Hash-based Message Authentication Code (HMAC)-based Extract-and-Expand Key Derivation Function (HKDF) can be used if HKDF is the PRF used. Since the communication between the host 102 and the Ethernet bridge 104 is encrypted, key wrap is not necessary and there is no need to have or utilize a keywrap hardware block in the Ethernet bridge 104.

If the peers' SEKs match, i.e., the host 102 and the Ethernet bridge 104 have the same SEK, the second step is to track distribution of the SAK (MACsec key) generated by the host 102 using, e.g., a true random number generator (TRNG) or a strong pseudorandom number generator (PRNG), to the Ethernet bridge 104 and installation of the SAK on the Ethernet bridge 104 following a key distribution protocol. In some embodiments, the key distribution protocol is a Layer 2 protocol and requires the use of an Ethertype, which is created to define the MACsec key distribution protocol. In some embodiments, the key distribution protocol also provides a mechanism to track peer liveliness to detect a break in the created secured communication channel, wherein such tracking is important especially when an old SAK is being renewed. In some embodiments, the protocol is a simple server-client communication mechanism where the host 102 is a fixed key (SAK) server and the Ethernet bridge 104 is a fixed supplicant of the SAK. In some embodiments, the tracking is enabled by sharing the AN of the distributed SAK and the latest and the old transmit (tx) and receive (rx) secure association (SA) channel bits.

In some embodiments, the following are assumed to be setup first before the cryptography scheme and the protocol implementation steps described above. For pre-shared key configuration, the host 102 is configured to pre-program a connectivity association key (CAK) to the Ethernet bridge 104 in an one-time password (OTP). For configurations, the set of read-write registers 214 of the Ethernet bridge 104 is configured to maintain one or more of the following pre-programmed and configurable parameters: CAK name (CKN), confidentiality/security scheme (such as integrity and encryption), key length, the lowest PN, the next PN, PN expiry value, a periodic packet interval (default to 1sec), and a heartbeat packet interval (default to 2sec). Note that the protocol supports 128 bit-length key to be generated, which provides strong security, but it can be expanded by updating the register configuration to support key size of 256 bits.

In some embodiments, two approaches can be used by the host 102 and the Ethernet bridge 104 for SEK generation in the first step described above. In some embodiments, one approach is to use HKDF for SEK generation, which requires fewer input parameters. The following formula shows the SEK generation using the HKDF scheme:

$$SEK = HKDF(CAK,\ Constant\_SEK,\ CKN)$$

where Constant_SEK is a text string constant, e.g., "Session Key".

In some embodiments, another approach is to use AES-CMAC PRF defined in NIST SP 800 108r1 for iterative for SEK generation in counter mode as:

*For iterator = 1 to N*

*SEK = SEK | AES_CMAC(CAK, iterator ‖ Label ‖ 0 ‖ Constant ‖ Key_Len);*

where, N = 2 is for the 128 bits key length and N= 3 is for the 256 bits key length. Iterator is a loop counter when deriving the SEK, Label is the Constant_SEK, Constant is CKN, and Key_Len is the length of the key in bits.

In some embodiments, the key distribution protocol used in the second step described above involves exchanging a few parameters for identification of the SAK and to create and track a MACsec session. The following is an example of a process for SAK generation and distribution:

- At step 1, the Ethernet bridge 104 creates a transmit secured channel with the host 102 using its SCI.
- At step 2, the Ethernet bridge 104 initiates a MACsec session to send its ID, which is a unique identifier of the Ethernet bridge 104 (Id_EB), and the SCI along with a sequence number (SQ) to the host 102 as an Ethernet frame/packet.
- At step 3, the Ethernet bridge 104 encrypts the Ethernet frame/packet containing its ID and its SCI with the SQ and sends the encrypted Ethernet frame/packet to the host 102 periodically as a frame/packet via the transmit secured channel. FIG. 3A depicts an example of the periodic frame/packet sent from the Ethernet bridge 104 to the host 102 to find out a potential participant for the MACsec session. As shown in FIG. 3A, the plaintext portion of the packet, e.g., the packet header, includes a version, a device Id and the SQ. This portion is used partly as additional authenticated data (AAD) for the AES-GCM encrypt process. The rest of the packet contents are encrypted with AES-GCM-128. In some embodiments, the SQ will be incremented for each frame/packet that the Ethernet bridge 104 sends. The SQ starts from 0 and counts to a .maximum defined value and rounds to 0 after reaching the maximum defined value. The protocol makes sure that the rounding does not happen while performing the rekeying process discussed below that detects a potential SQ round off.
- At step 4, the host 102 receives the encrypted frame/packet and validates the TAG of the frame. If the validation is ok, the host 102 decrypts the frame. If the validation is not ok, the host 102 drops the frame. Verifying the TAG and a successful decryption of the frame proves that the Ethernet bridge 104 is a legit sender.

- At step 5, the host 102 creates a transmit secured channel with its SCI and a receive secured channel with the Ethernet bridge 104's SCI once the Ethernet bridge 104 is proven to be a legit sender. The host 102 then generates a SAK using the TRNG or a strong PRNG source in hardware. The key number (KN) for the SAK starts with 1 and increments each time a new SAK corresponding to this MACsec session is distributed. In some embodiments, the session is identified with participant's IDs that are exchanged during session initialization.
- At step 6, the host 102 distributes the newly generated SAK along with the rest of the content in encrypted packet using the SEK back to the Ethernet bridge 104 over the transmit secured channel. FIG. 3B depicts an example of the SAK distribution packet sent from the host 102 to the Ethernet bridge 104. In some embodiments, the encrypted packet is a unicast frame with the Ethernet bridge 104's MAC address as its destination address. In some embodiments, the host 104 also keeps track of installation on the SAK on the Ethernet bridge 104 by sending out its installation status bits in an Install_Status field of the frame/packet if the SAK is installed with its corresponding AN.
- At step 7, the Ethernet bridge 104 receives the SAK distribution packet and verifies its authenticity by verifying the AES-GCM TAG present in the packet. If the packet is verified, the Ethernet bridge 104 decrypts the packet, retrieves the SAK from the packet, installs the SAK, and sends out its installation status in an Install_Status field of an installation status frame back to the host 102. FIG. 3C depicts an example of the installation status frame containing the Install_Status field used to track the SAK installation status. In some embodiments, this is a unicast frame with the MAC address of the host 102 as its destination address.
- At step 8, the host 102 and the Ethernet bridge 104 start secured communication with each other over the secured channels once both confirm that the SAK has been installed successfully and the transmit and receive secured channels have been setup. In some embodiments, the host 102 and the Ethernet bridge 104 exchange a heartbeat frame used to monitor liveness of the two parties. b. If either encounters that the other is no longer live, it will go back to a special mode where the receive secured channels are closed as explained in detail below.

In some embodiments, the host 102 is configured to use sequence numbers (SQs) of packets being exchanged between the host 102 and the Ethernet bridge 104 as a primary mechanism to detect a packet replay used in a cyberattack. In some embodiments, the SQ is combined with the device identifier (ID) of the Ethernet bridge 104 generated during the MACsec session to create an IV used as an input parameter for encryption under AES-GCM. A receiver of the packet keeps tracking of the expected next SQ based on the previous SQ that it has received. An attacker could replay the received frame. Under the key distribution protocol, upon receiving the replayed frame with a replayed SQ, the receiver can identify if the received packet is a replay by matching the received SQ with the expected one. In some embodiments, the SQ is added to detect replays, which is then used in the IV generation process along with the session ID value. In some embodiments, the sender might have sent the frame but the receiver missed reception of the packet due to a packet loss. A threshold can be defined and configured to allow packets that could have potentially been missed (and thus resent) not to be identified as a replay packet.

In some embodiments, the host 102 is configured to initiate rekeying, i.e., regeneration of the SAK by detecting expiry of a PN of a packet received from the Ethernet bridge 104. In some embodiments, the host 102 performs a MACsec packet number check periodically by comparing the PN against a configurable PN expiry value. For example, the PN is 4 bytes in a MACsec frame and a default value of PN can be derived from the IEEE 802.1x-2020 EAPOL-MKA frame as 0xC0000000 for a default cipher suite of GCM-AES-128. In some embodiments, the last SAK distribution frame being used is repeated (e.g., maximum of 2 times) by the host 102 and the Ethernet bridge 104 until the current SAK has been renewed and the new SAK has been fully installed on the Ethernet bridge 104. In some embodiments, the rekeying process can be optimized based on hardware capabilities/configurations of the peers. If the hardware of the host 102 can install the new SAK directly, both bits of latest_tx and latest_rx in the Install_Status field can be set to 1 and sent by the host 102. The Ethernet bridge 104 having the same hardware capabilities of key installation then both latest_tx and latest_rx bits in its response as well. Upon receiving the response frame from the Ethernet bridge 104, the host 102 enables a new transmit and receive secure association (SA) corresponding to the renewed SAK and deletes the transmit and receive SA corresponding to the old SAK. A new SAK distribution frame is sent out with indication that the SAK is installed on the Ethernet bridge 104 by setting the old_tx and old_rx bits are set to 1 and including the currently distributed SAK's AN.

In some embodiments, the host 102 and the Ethernet bridge 104 are configured to exchange one or more heartbeat messages between them to determine if the other peer is active/alive or not. In some embodiments, the heartbeat messages are exchanged periodically and a miss of a heartbeat message by a peer means the peer is not live. If the host 102 detects a missed heartbeat message, the host 102 will stop communications with the Ethernet bridge 104 and turns into silent mode in which the host 102 does not advertise information of the MACsec session and no SAK distribution frame is sent until the host 102 receives a packet from the Ethernet bridge 104 again. Instead the host 102 will simply listen to the frames for a certain SEK match. In some embodiments, the host 102 will delete its transmit and receive SAs and all receive secured channels corresponding to this session. If the Ethernet bridge 104 detects a missed heartbeat message, the Ethernet bridge 104 will delete its transmit and receive SAs and all Receive secured channels corresponding to the session. In some embodiments, the Ethernet bridge 104 will delete its identity/ID, create a new ID, and reset its SQ starting back from 0. In some embodiments, the Ethernet bridge 104 will recreate a new packet and periodically pings for the host 102 to connect.

In some embodiments, a CAK is pre-programmed into an OTP for pre-shared key configuration as discussed above. The CAK may be reused for a prolonged period of time with the generated SEK. Cryptanalysis could result in CAK being reconstructed with enough received messages, which can impact the security of the entire SAK distribution protocol using the SEK. In one embodiment, size of the CAK size can be increased, e.g., from 128 bits to 256 bits to make cryptanalysis harder. In another embodiments, the CAK is provisioned in a secure environment for leak avoidance and, upon a successful provision of the CAK, traces of the CAK is securely erased elsewhere.

FIG. 4 depicts a flowchart 400 of an example of a process to support secured host to Ethernet bridge key distribution. Although the figure depicts functional steps in a particular order for purposes of illustration, the processes are not limited to any particular order or arrangement of steps. One skilled in the relevant art will appreciate that the various steps portrayed in this figure could be omitted, rearranged, combined and/or adapted in various ways.

In the example of FIG. 4, the flowchart 400 starts at block 402, where a SEK is generated under a crypto scheme and a packet encrypted using the SEK is sent from an Ethernet bridge to a host for a MACsec session. The flowchart 400 continues to step 404, where a SAK generated by the host and encrypted with the SEK for the MACsec session is received by the Ethernet bridge if the SEK generated by the Ethernet bridge matches with a SEK generated by the host. The flowchart 400 continues to step 406, where the SAK is decrypted and installed on the Ethernet bridge. The flowchart 400 ends at step 408, where a secured communication channel is established between the host and the Ethernet bridge using the SAK, wherein communications between the host and the Ethernet bridge are encrypted with the SEK.

The foregoing description of various embodiments of the claimed subject matter has been provided for the purposes of illustration and description. It is not intended to be exhaustive or to limit the claimed subject matter to the precise forms disclosed. Many modifications and variations will be apparent to the practitioner skilled in the art. Embodiments were chosen and described in order to best describe the principles of the invention and its practical application, thereby enabling others skilled in the relevant art to understand the claimed subject matter, the various embodiments and the various modifications that are suited to the particular use contemplated.

The following is a list of further preferred embodiments of the invention:

Embodiment 1. A system, comprising:

an Ethernet bridge having a plurality of hardware blocks, wherein one or more of the plurality of hardware blocks are configured to

generate a session encryption key (SEK) under a crypto scheme and send a packet encrypted using the SEK to a host for a Media Access Control Security (MACsec) session;

receive a secure association key (SAK) generated by the host and encrypted with the SEK for the MACsec session if the SEK generated by the Ethernet bridge matches with a SEK generated by the host;

decrypt and install the SAK on the Ethernet bridge; and
establish a secured communication channel between the host and the Ethernet bridge using the SAK, wherein all communications between the host and the Ethernet bridge are encrypted with the SEK.

Embodiment 2. The system of Embodiment 1, wherein:
the Ethernet bridge is resource-constrained with no processor and no non-volatile storage.

Embodiment 3. The system of Embodiment 1, wherein:
the Ethernet bridge is configured to

collect data from a plurality of electronic devices; and

convert the collected data into one or more Ethernet packets to be sent to the host.

Embodiment 4. The system of Embodiment 3, wherein:
each of the plurality of electronic devices is a sensing device.

Embodiment 5. The system of Embodiment 4, wherein:
both the Ethernet bridge and the plurality of electronic devices are deployed in an automobile.

Embodiment 6. The system of Embodiment 4, wherein:
each of the plurality of electronic devices is one of an audio/video-enabled device, a GPS-enabled device, a radar, a Light Detection and Ranging (LiDAR) device, and other type of electronic device capable of collecting data.

Embodiment 7. The system of Embodiment 1, wherein:
the Ethernet bridge and the host are configured to use Hash-based Message Authentication Code (HMAC)-based Extract-and-Expand Key Derivation Function (HKDF) as the crypto scheme for SEK generation.

Embodiment 8. The system of Embodiment 1, wherein:
the Ethernet bridge and the host are configured to use AES-Cipher-based Message Authentication Code (CMAC) as the crypto scheme for SEK generation.

Embodiment 9. The system of Embodiment 1, further comprising:
said host configured to

determine if the SEK generated by the Ethernet bridge matches with the SEK generated by the host;

generate and distribute the SAK to the Ethernet bridge, wherein the SAK is encrypted with the SEK.

Embodiment 10. The system of Embodiment 9, further comprising:
a switch communicatively coupled between the host and a plurality of Ethernet bridges, wherein each of the plurality of Ethernet bridges connects to a plurality of electronic devices.

Embodiment 11. The system of Embodiment 10, wherein:
the host is configured to configure the switch to select one of the plurality of Ethernet bridges at a time, so that the host is configured to distribute a SAK to be installed on the one of the plurality of Ethernet bridges to establish a peer-to-peer communication channel with the one of the plurality of Ethernet bridges to receive data from the plurality of electronic devices associated with that Ethernet bridge.

Embodiment 12. The system of Embodiment 9, wherein:
the host is configured to generate the SAK using the rue random number generator (TRNG) or a strong pseudorandom number generator (PRNG).

Embodiment 13. The system of Embodiment 9, wherein:
the host is configured to track installation status of the SAK on the Ethernet bridge.

Embodiment 14. The system of Embodiment 9, wherein:
the host is configured to use sequence numbers (SQs) of packets being exchanged between the host and the Ethernet bridge to detect a packet replay used in a cyberattack.

Embodiment 15. The system of Embodiment 9, wherein:
the host is configured to initiate regeneration of the SAK by detecting expiry of a packet number (PN) of a packet received from the Ethernet bridge.

Embodiment 16. The system of Embodiment 9, wherein:
the host and the Ethernet bridge are configured to exchange one or more heartbeat messages between them to determine if the other peer is active/alive or not.

Embodiment 17. The system of Embodiment 9, wherein:
the host is configured to pre-program a connectivity association key (CAK) to the Ethernet bridge in an one-time password (OTP), wherein the CAK is provisioned in a secure environment for leak avoidance.

Embodiment 18. A hardware-implemented method, comprising:

generating a session encryption key (SEK) under a crypto scheme and sending a packet encrypted using the SEK from an Ethernet bridge to a host for a Media Access Control Security (MACsec) session;

receiving a secure association key (SAK) generated by the host and encrypted with the SEK for the MACsec session if the SEK generated by the Ethernet bridge matches with a SEK generated by the host;

decrypting and installing the SAK on the Ethernet bridge; and

establishing a secured communication channel between the host and the Ethernet bridge using the SAK, wherein communications between the host and the Ethernet bridge are encrypted with the SEK.

Embodiment 19. The method of Embodiment 18, wherein:
the Ethernet bridge is resource-constrained with no processor and no non-volatile storage.

Embodiment 20. The method of Embodiment 18, further comprising:
using Hash-based Message Authentication Code (HMAC)-based Extract-and-Expand Key Derivation Function (HKDF) as the crypto scheme for SEK generation.

Embodiment 21. The method of Embodiment 18, further comprising:
using AES-Cipher-based Message Authentication Code (CMAC) as the crypto scheme for SEK generation.

Embodiment 22. The method of Embodiment 18, further comprising:

determining if the SEK generated by the Ethernet bridge matches with the SEK generated by the host;

generating and distribute the SAK to the Ethernet bridge, wherein the SAK is encrypted with the SEK.

Embodiment 23. The method of Embodiment 22, further comprising:
configuring a switch communicatively coupled between the host and a plurality of Ethernet bridges to select one of the plurality of Ethernet bridges at a time so that the host is configured to distribute a SAK to be installed on the one of the plurality of Ethernet bridges to establish a peer-to-peer communication channel with the one of the plurality of Ethernet bridges to receive data from a plurality of electronic devices associated with that Ethernet bridge.

Embodiment 24. The method of Embodiment 22, further comprising:
generating the SAK using the rue random number generator (TRNG) or a strong pseudorandom number generator (PRNG).

Embodiment 25. The method of Embodiment 22, further comprising:
tracking installation status of the SAK on the Ethernet bridge.

Embodiment 26. The method of Embodiment 22, further comprising:
using sequence numbers (SQs) of packets being exchanged between the host and the Ethernet bridge to detect a packet replay used in a cyberattack.

Embodiment 27. The method of Embodiment 22, further comprising:
initiating regeneration of the SAK by detecting expiry of a packet number (PN) of a packet received from the Ethernet bridge.

Embodiment 28. The method of Embodiment 22, further comprising:
exchanging one or more heartbeat messages between the host and the Ethernet bridge to determine if the other peer is active/alive or not.

Embodiment 29. The method of Embodiment 22, further comprising:
pre-programming a connectivity association key (CAK) to the Ethernet bridge in an one-time password (OTP), wherein the CAK is provisioned in a secure environment for leak avoidance.

Embodiment 30. A system, comprising:

a means for generating a session encryption key (SEK) under a crypto scheme and sending a packet encrypted using the SEK from an Ethernet bridge to a host for a Media Access Control Security (MACsec) session;

a means for receiving a secure association key (SAK) generated by the host and encrypted with the SEK for the MACsec session if the SEK generated by the Ethernet bridge matches with a SEK generated by the host;

a means for decrypting and installing the SAK on the Ethernet bridge; and

a means for establishing a secured communication channel between the host and the Ethernet bridge using the SAK, wherein communications between the host and the Ethernet bridge are encrypted with the SEK.

**Claims**

1. A system, comprising:

   an Ethernet bridge having a plurality of hardware blocks, wherein one or more of the plurality of hardware blocks are configured to
   generate a session encryption key (SEK) under a crypto scheme and send a packet encrypted using the SEK to a host for a Media Access Control Security (MACsec) session;
   receive a secure association key (SAK) generated by the host and encrypted with the SEK for the MACsec session if the SEK generated by the Ethernet bridge matches with a SEK generated by the host;
   decrypt and install the SAK on the Ethernet bridge; and
   establish a secured communication channel between the host and the Ethernet bridge using the SAK, wherein all communications between the host and the Ethernet bridge are encrypted with the SEK.

2. The system of Claim 1, wherein:
   the Ethernet bridge is resource-constrained with no processor and no non-volatile storage.

3. The system of one of Claims 1 or 2, wherein:
   the Ethernet bridge is configured to

   collect data from a plurality of electronic devices; and
   convert the collected data into one or more Ethernet packets to be sent to the host.

4. The system of Claim 3, wherein:
   each of the plurality of electronic devices is a sensing device.

5. The system of Claim 4, wherein:
   both the Ethernet bridge and the plurality of electronic devices are deployed in an automobile.

6. The system of Claim 4, wherein:
   each of the plurality of electronic devices is one of an audio/video-enabled device, a GPS-enabled device, a radar, a Light Detection and Ranging (LiDAR) device, and other type of electronic device capable of collecting data.

7. The system of one of Claims 1 to 6, wherein:
   the Ethernet bridge and the host are configured to use Hash-based Message Authentication Code (HMAC)-based Extract-and-Expand Key Derivation Function (HKDF) as the crypto scheme for SEK generation.

8. The system of one of Claims 1 to 7, wherein:
   the Ethernet bridge and the host are configured to use AES-Cipher-based Message Authentication Code (CMAC) as the crypto scheme for SEK generation.

9. The system of one of Claims 1 to 8, further comprising:
   said host configured to

   determine if the SEK generated by the Ethernet bridge matches with the SEK generated by the host;
   generate and distribute the SAK to the Ethernet bridge, wherein the SAK is encrypted with the SEK.

10. The system of Claim 9, further comprising:
    a switch communicatively coupled between the host and a plurality of Ethernet bridges, wherein each of the plurality of Ethernet bridges connects to a plurality of electronic devices.

11. The system of Claim 10, wherein:
the host is configured to configure the switch to select one of the plurality of Ethernet bridges at a time, so that the host is configured to distribute a SAK to be installed on the one of the plurality of Ethernet bridges to establish a peer-to-peer communication channel with the one of the plurality of Ethernet bridges to receive data from the plurality of electronic devices associated with that Ethernet bridge.

12. The system of Claim 9, wherein:

the host is configured to generate the SAK using the rue random number generator (TRNG) or a strong pseudorandom number generator (PRNG), or
wherein:
the host is configured to track installation status of the SAK on the Ethernet bridge, or
wherein:
the host is configured to use sequence numbers (SQs) of packets being exchanged between the host and the Ethernet bridge to detect a packet replay used in a cyberattack, or
wherein:
the host is configured to initiate regeneration of the SAK by detecting expiry of a packet number (PN) of a packet received from the Ethernet bridge, or
wherein:
the host and the Ethernet bridge are configured to exchange one or more heartbeat messages between them to determine if the other peer is active/alive or not, or
wherein:
the host is configured to pre-program a connectivity association key (CAK) to the Ethernet bridge in an one-time password (OTP), wherein the CAK is provisioned in a secure environment for leak avoidance.

13. A hardware-implemented method, comprising:

generating a session encryption key (SEK) under a crypto scheme and sending a packet encrypted using the SEK from an Ethernet bridge to a host for a Media Access Control Security (MACsec) session;
receiving a secure association key (SAK) generated by the host and encrypted with the SEK for the MACsec session if the SEK generated by the Ethernet bridge matches with a SEK generated by the host;
decrypting and installing the SAK on the Ethernet bridge; and
establishing a secured communication channel between the host and the Ethernet bridge using the SAK, wherein communications between the host and the Ethernet bridge are encrypted with the SEK.

14. The method of Claim 13, wherein:

the Ethernet bridge is resource-constrained with no processor and no non-volatile storage, or
further comprising:
using Hash-based Message Authentication Code (HMAC)-based Extract-and-Expand Key Derivation Function (HKDF) as the crypto scheme for SEK generation, or
further comprising:
using AES-Cipher-based Message Authentication Code (CMAC) as the crypto scheme for SEK generation, or
further comprising:

determining if the SEK generated by the Ethernet bridge matches with the SEK generated by the host;
generating and distribute the SAK to the Ethernet bridge, wherein the SAK is encrypted with the SEK, and/or

further comprising:
configuring a switch communicatively coupled between the host and a plurality of Ethernet bridges to select one of the plurality of Ethernet bridges at a time so that the host is configured to distribute a SAK to be installed on the one of the plurality of Ethernet bridges to establish a peer-to-peer communication channel with the one of the plurality of Ethernet bridges to receive data from a plurality of electronic devices associated with that Ethernet bridge, or
further comprising:
generating the SAK using the rue random number generator (TRNG) or a strong pseudorandom number generator (PRNG), or
further comprising:
tracking installation status of the SAK on the Ethernet bridge, or

further comprising:
using sequence numbers (SQs) of packets being exchanged between the host and the Ethernet bridge to detect a packet replay used in a cyberattack, or
further comprising:
initiating regeneration of the SAK by detecting expiry of a packet number (PN) of a packet received from the Ethernet bridge, or
further comprising:
exchanging one or more heartbeat messages between the host and the Ethernet bridge to determine if the other peer is active/alive or not, or
further comprising:
pre-programming a connectivity association key (CAK) to the Ethernet bridge in an one-time password (OTP), wherein the CAK is provisioned in a secure environment for leak avoidance.

15. A system, comprising:

a means for generating a session encryption key (SEK) under a crypto scheme and sending a packet encrypted using the SEK from an Ethernet bridge to a host for a Media Access Control Security (MACsec) session;
a means for receiving a secure association key (SAK) generated by the host and encrypted with the SEK for the MACsec session if the SEK generated by the Ethernet bridge matches with a SEK generated by the host;
a means for decrypting and installing the SAK on the Ethernet bridge; and
a means for establishing a secured communication channel between the host and the Ethernet bridge using the SAK, wherein communications between the host and the Ethernet bridge are encrypted with the SEK.

FIG. 1A

EP 4 683 274 A1

150

HOST
102

SWITCH
152

ETHERNET
BRIDGE
104

106

106

106

ETHERNET
BRIDGE
104

106

106

106

FIG. 1B

FIG. 2

EP 4 683 274 A1

| 1 byte | 16 bytes | 4 bytes | 1 byte | 8 bytes | 16 bytes |
|---|---|---|---|---|---|
| Version | Id | Sequence Number | FrameType | SCI | GCM Tag |

Figure. Periodic Ping frame

Encrypted content

FIG. 3A

| 1 byte | 16 bytes | 4 bytes | 1 byte | 8 bytes | 16 bytes | 24 bytes | 5 bytes | 16 bytes |
|---|---|---|---|---|---|---|---|---|
| Version | Id | Sequence Number | FrameType | SCI | Identifier_Target | SAK | Install Status | GCM Tag |

Figure. Key Distrbution Frame

Encrypted content

FIG. 3B

| 1 byte | 16 bytes | 4 bytes | 1 byte | 8 bytes | 16 bytes | 5 bytes | 16 bytes |
|--------|----------|---------|--------|---------|----------|---------|----------|
| Version | Id | Sequence Number | FrameType | SCI | Identifier_Target | Install Status | GCM Tag |

Encrypted content

Figure. Installation Tracking Frame

FIG. 3C

| 1 byte | 16 bytes | 4 bytes | 1 byte | 16 bytes | 5 bytes | 16 bytes |
|--------|----------|---------|--------|----------|---------|----------|
| Version | Id_A | Sequence Number_A | FrameType | Id_B | Install Status | GCM Tag |

Encrypted content

Figure. Heartbeat frame from A to B

FIG. 3D

400

Generate a session encryption key (SEK) under a crypto scheme and send a packet encrypted using the SEK from an Ethernet bridge to a host for a Media Access Control Security (MACsec) session
402

Receive a secure association key (SAK) generated by the host and encrypted with the SEK for the MACsec session if the SEK generated by the Ethernet bridge matches with a SEK generated by the host
404

Decrypt and install the SAK on the Ethernet bridge
406

Establish a secured communication channel between the host and the Ethernet bridge using the SAK, wherein all communications between the host and the Ethernet bridge are encrypted with the SEK
408

FIG. 4

Europäisches
Patentamt

European
Patent Office

Office européen
des brevets

# EUROPEAN SEARCH REPORT

**Application Number**

EP 25 18 9964

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/311615 A1 (GORDON COLIN [US] ET AL) 29 September 2022 (2022-09-29) * paragraph [0016] - paragraph [0049]; figures 2,4,6 * | 1-15 | INV. H04L9/40 |
| X | US 11 233 635 B1 (GORDON COLIN [US]) 25 January 2022 (2022-01-25) * column 2 - column 9; figures 2, 6, 8 * | 1-15 | ADD. H04L9/32 H04L67/12 |
| X | EP 4 246 886 A1 (JUNIPER NETWORKS INC [US]) 20 September 2023 (2023-09-20) * paragraph [0007] - paragraph [0054] * | 1-15 | |
| A | US 2021/391984 A1 (FLORIT LIONEL [US] ET AL) 16 December 2021 (2021-12-16) * paragraph [0020] - paragraph [0068] * | 1-15 | |
| A | CARNEVALE BERARDINO ET AL: "A hardware accelerator for the IEEE 802.1X-2010 key hierarchy in automotive applications", 2015 IEEE/ACS 12TH INTERNATIONAL CONFERENCE OF COMPUTER SYSTEMS AND APPLICATIONS (AICCSA), IEEE, 17 November 2015 (2015-11-17), pages 1-6, XP032920544, DOI: 10.1109/AICCSA.2015.7507198 [retrieved on 2016-07-07] * the whole document * | 1-15 | TECHNICAL FIELDS SEARCHED (IPC) H04L |

-/--

The present search report has been drawn up for all claims

| Place of search | Date of completion of the search | Examiner |
|---|---|---|
| Munich | 2 October 2025 | Dang, Hoai |

EPO FORM 1503 03.82 (P04C01)

**EUROPEAN SEARCH REPORT**

**Application Number**

**EP 25 18 9964**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHOI JU-HO ET AL: "MACsec Extension over Software-Defined Networks for in-Vehicle Secure Communication", 2018 TENTH INTERNATIONAL CONFERENCE ON UBIQUITOUS AND FUTURE NETWORKS (ICUFN), IEEE, 3 July 2018 (2018-07-03), pages 180-185, XP033386246, DOI: 10.1109/ICUFN.2018.8436963 [retrieved on 2018-08-14] * the whole document * | 1-15 | |

----- 

TECHNICAL FIELDS
SEARCHED        (IPC)

The present search report has been drawn up for all claims

| Place of search | Date of completion of the search | Examiner |
|---|---|---|
| Munich | 2 October 2025 | Dang, Hoai |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 9964

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2025

| Patent document cited in search report | Publication date | Patent family member(s) | | Publication date |
|---|---|---|---|---|
| US 2022311615 A1 | 29-09-2022 | NONE | | |
| US 11233635 B1 | 25-01-2022 | NONE | | |
| EP 4246886 A1 | 20-09-2023 | CN | 116800406 A | 22-09-2023 |
| | | EP | 4246886 A1 | 20-09-2023 |
| | | US | 2023300171 A1 | 21-09-2023 |
| US 2021391984 A1 | 16-12-2021 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 63672044 A